# EUROPÄISCHE PATENTANMELDUNG

(11) **EP 1 138 972 A1**
(43) Veröffentlichungstag der Anmeldung: **04.10.2001**
(21) Anmeldenummer: 01101257.2
(22) Anmeldetag: 19.01.2001
(51) Int. Cl.: F16D 69/02

(54) **Reibbelag und Verfahren zur Herstellung**

(30) Priorität: 31.03.2000 DE 10016326
(71) Anmelder: Federal-Mogul Friction Products GmbH, 51709 Marienheide (DE)
(72) Erfinder: Hüner, Ronald, Dr., 51375 Leverkusen (DE); Emmet, Robert Allen, 56477 Rennerod (DE); Manz, Wolfgang, 51674 Wiel-Forst (DE); Paul, Hans Günther, Dr., 46509 Xanten (DE)
(74) Vertreter: Becker Kurig Straus

(57) **Zusammenfassung**

Ein Verfahren zur Herstellung von Reibbelägen aus Kunstharz für Bremsen wird offenbart, wobei das Verfahren ein Mischen der einzelnen Komponenten eines Kunstharzes, ein Pressen der Mischung in einer beheizten Form und ein Aushärten in einem Härtungsofen aufweist. Das Pressen wird bei einer Temperatur von etwa 200°C bis etwa 400°C durchgeführt wird. Durch die hohe Temperatur wird der Reibbelag einer schnellen Aushärtung unterzogen. Bei Reibbelägen mit geringen bis normalen Dicken ist eine anschließende Härtung nicht erforderlich. Die Verringerung der Presszeit und das Entfallen eines Herstellungsschrittes bewirken eine deutliche schnellere Herstellung der Reibbeläge und dadurch eine erhebliche Kostenersparnis. Weiterhin bewirkt die hohe Temperatur beim Pressvorgang eine andere Reaktion in der Harzmischung. Die Reibbeläge weisen aufgrund der veränderten Reaktion ein anderes Eigenschaftsprofil, in vielerlei Hinsicht ein weit überlegendereres, auf.

## Beschreibung

Diese Erfindung betrifft ein Verfahren zur Herstellung eines Reibbelags aus Kunstharz für Bremsen und einen Reibbelag, der nach diesem Verfahren hergestellt wurde.

Reibbeläge werden üblicherweise aus Kunstharz, beispielsweise aus Phenolharz, hergestellt. Phenolharz ist ein Kunstharz, der durch Kondensation von Phenolen mit Aldehyden, insbesondere Formaldehyd, durch Derivatisierung der dabei resultierenden Kondensate oder durch Addition von Phenolen an ungesättigten Verbindungen, beispielsweise Acetylen, Terpene oder natürliche Harze, gewonnen wird. Wichtigste Phenol-Komponenten für Phenolharze sind neben Phenol selbst seine Alkyl-Derivate, beispielsweise Kresole, Xylenole, Nonylphenol und Octylphenol, und Aryl-Derivate, beispielsweise Phenylphenol, zweiwertige Phenole, beispielsweise Resorcin oder Bisphenol A, und Naphtole. Bedeutendste Aldehyd-Komponente ist Formaldehyd in unterschiedlichsten Anbietungsformen, beispielsweise wässeriger Lösung, Paraldehyd und Formaldehyd abspaltende Verbindungen.

Reibbeläge aus Kunstharz, beispielsweise aus Phenolharz, werden üblicherweise in einem Verfahren hergestellt, das ein Mischen der Komponenten für die Harzmischung aufweist. Danach wird das Harzgemisch in einer beheizten Pressform für mehrere Minuten gepresst, um die gewünschte Gestaltung bzw. Form zu erhalten. Die Temperatur beim Pressen beträgt üblicherweise Raumtemperatur bis etwa 180°C. Beim meist verwendeten Heißpressen werden Temperaturen von über 100°C verwendet. Anschließend werden die Reibbeläge in einem Härtungsofen ausgehärtet. Die Temperatur beim Aushärten beträgt etwa 160°C bis 230°C.

Aus zwei Gründen wird eine kurze Presszeit bevorzugt. Zum einen aus wirtschaftlichen Gründen und zum anderen aufgrund der Tatsache, dass sich beim Pressen in der beheizten Pressform eine Gas undurchlässige Presshaut an den Rändern der gepressten Reibbeläge bildet, die den Austritt der Reaktionsgase stark verlangsamt. Durch diese Presshaut können entstandene Reaktionsgase, beispielsweise NH₃, CH₂O, und H₂O, nur langsam den Reibbelägen entweichen. Deshalb werden die Reibbeläge nach dem Pressen in einem Härtungsofen gebracht, damit die Reaktionsgase weiter entweichen können.

Unter Kompressibilität eines Materials wird die Verformbarkeit aufgrund einer Druckeinwirkung verstanden. Reibbeläge werden bei einem Bremsvorgang heiß (etwa 600°C). Reibbeläge, die nach dem konventionellen Verfahren hergestellt werden, weisen im heißen Zustand eine höhere Kompressibilität im Vergleich zum kalten Zustand auf. So weisen im herkömmlichen Verfahren hergestellte Reibbeläge eine Grundkompressibilität von etwa 100 µm auf, die sich bei einer Temperatur von etwa 400°C zu einer Kompressibilität von etwa 250 µm bis etwa 350 µm erhöht.

Durch verschiedene Maßnahmen wird das temperaturabhängige Eigenschaftsprofil des Reibbelags ausgeglichen. Beispielsweise wird die Kompressibilität im kalten Zustand bzw. die Grundkompressibilität des Harzgemisches vermindert. Die Reibbeläge mit verminderter Grundkompressibilität weisen jedoch die Nachteile eines geringeren Komforts beim Bremsvorgang und einer induzierten und somit verringerten Scheibenreißfestigkeit auf. Auch werden mechanische Veränderungen von Bauausführungsformen einer Bremsvorrichtung vorgenommen, die mit diesen Reibbelägen ausgestattet ist, beispielsweise werden Pedalwege der Bremse erhöht und/oder Luftspiele der Bremse vergrößert.

Aufgabe der Erfindung ist es, ein Verfahren zur Herstellung von Reibbelägen aus Kunstharz für Bremsen bereitzustellen, mit dem Reibbeläge herstellbar sind, deren Kompressibilität im heißen Zustand nur geringfügig von der Grundkompressibilität abweicht. Eine weitere Aufgabe der Erfindung ist es, ein Verfahren zur Herstellung von Reibbelägen aus Kunstharz für Bremsen bereitzustellen, bei dem die Herstellungszeit für die Reibbeläge erheblich reduziert ist, wodurch eine wesentliche Kostenreduzierung entsteht.

Diese Aufgaben werden durch das Verfahren gemäß dem Anspruch 1 gelöst.

Das erfindungsgemäße Verfahren zur Herstellung von Reibbelägen für Bremsen umfasst ein Mischen von verschiedenen Bestandteilen eines Phenolharzes und ein Pressen der Mischung in einer beheizten Pressform. Die Temperatur beim Pressen beträgt etwa 200°C bis etwa 400°C. Aufgrund der hohen Temperatur beim Pressvorgang wird die Ausbildung einer Gas undurchlässigen Presshaut an den Rändern der Reibbeläge weitgehend verhindert. Deshalb können entstandene Reaktionsgase, beispielsweise NH₃, CH₂O, und H₂O, schnell aus der gepressten Materialmischung entweichen. Auch wird der erfindungsgemäße Reibbelag aufgrund der hohen Temperatur beim Pressen einem schnellen Härtungsvorgang unterzogen. Die Pressdauer nimmt mit steigender Temperatur und sinkender Dicke des Reibbelages ab. Die Presszeit kann einerseits erheblich reduziert werden und andererseits ist bei Reibbelägen normaler und geringer Dicke der nachfolgende Herstellungsschritt einer Aushärtung nicht mehr erforderlich. Die Verringerung der Presszeit und das Entfallen eines Herstellungsschrittes bewirken eine deutliche schnellere Herstellung der Reibbeläge und dadurch eine erhebliche Kostenersparnis. Weiterhin bewirkt die hohe Temperatur beim Pressvorgang eine andere Reaktion in der Harzmischung, die bei der Reibbelagherstellung verwendet wird. Die Reibbeläge weisen aufgrund der veränderten Reaktion andere Eigenschaften auf als Reibbeläge, die nach dem konventionellen Verfahren hergestellt wurden. Die Kompressibilität bei den erfindungsgemäßen Reibbelägen weicht im heißen Zustand nur geringfügig von der Grundkompressibilität ab. Daher ist ein Ausgleichen durch eine Verschiebung der Kompressibilitäten nicht erforderlich. Ebenso ist ein mechanischer Ausgleich, beispielsweise durch eine Erhöhung von Pedalwegen oder eine Vergrößerung von Luftspielen einer Bremse, die mit den erfindungsgemäßen Reibbelägen ausgestattet ist, nicht erforderlich.

Bevorzugt wird beim Pressen der Kunstharzmischung für Reibbeläge eine Temperatur im Bereich von etwa 220°C bis etwa 350°C. Bevorzugter ist eine Temperatur im Bereich von etwa 240°C bis etwa 320°C, noch bevorzugter ist ein Temperaturbereich von etwa 260°C bis etwa 300°C. Am bevorzugsten ist jedoch eine Presstemperatur von 280°C.

Vorzugsweise werden die erfindungsgemäßen Reibbeläge für eine Zeitdauer von weniger als 6 min gepresst. Bevorzugter ist eine Pressdauer von weniger als 4 min, noch bevorzugter ist eine Pressdauer von weniger als 2 min. Am bevorzugsten ist jedoch ein Pressvorgang mit weniger als 1 min Dauer.

Vorzugsweise ist der Wert des Pressdruckes im Bereich von etwa 100 N/cm² bis etwa 500 N/cm². Bevorzugter ist ein Druckbereich von etwa 150 N/cm² bis etwa 400 N/cm². Am bevorzugsten wird ein Pressdruck im Bereich von etwa 200 N/cm² bis etwa 300 N/cm² verwendet.

Bevorzugt wird im erfindungsgemäßen Verfahren eine anschließende Aushärtezeit von bis zu etwa 12 Stunden Dauer. Bevorzugter ist eine Aushärtezeit von bis etwa 8 Stunden Dauer. Noch bevorzugter ist eine Aushärtezeit von weniger als 4 Stunden. Noch bevorzugter ist eine Aushärtezeit von bis zu 2 Stunden Dauer. Am bevorzugsten ist eine Aushärtezeit, deren Dauer nicht länger als 1 Stunde beträgt.

Ebenfalls bevorzugt wird im erfindungsgemäßen Verfahren zur Herstellung von Reibbelägen aus Kunstharz für Bremsen der Herstellungsschritt des Aushärtens in einem Härtungsofen weggelassen.

Bevorzugt ist ein Reibbelag aus Kunstharz für Bremsen, der nach dem erfindungsgemäßen Verfahren herstellbar ist.

Im Folgenden wird die Erfindung anhand eines Ausführungsbeispiels ausführlich erläutert, ohne die Erfindung dabei einzuschränken. Die Tabelle 1 gibt die einzelnen Komponenten der Reibbelagmischung an. Man beachte dabei, dass die angegebenen Werte für die bevorzugten Anteile nicht auf 100% normiert sind.

**Tabelle 1**

| **Material** | **Beispiel** | **von %** | **bis %** | **bevorzugt von %** | **bevorzugt bis %** |
|---|---|---|---|---|---|
| Harz | Phenolharz | 2 | 15 | 5 | 10 |
| Elastomer | SBR-Kautschuk | 0 | 10 | 2 | 5 |
| Metalle | Stahlfaser | 0 | 80 | 20 | 40 |
| Kohlenstoff | Ruß | 5 | 70 | 20 | 30 |
| Organische Faser | Aramid | 0 | 10 | 1 | 3 |
| Anorganische Faser | Steinwolle | 0 | 40 | 5 | 10 |
| Füllstoffe | Schwerspat | 5 | 50 | 10 | 15 |
| Abrassive | Aluminiumoxid | 0,1 | 15 | 0,5 | 4 |

Der Reibbelag im Ausführungsbeispiel weist eine Fläche von 200 cm² und eine Dicke von 21 mm auf. Der Reibbelag ist auf einer Stahlträgerplatte von 6 mm Stärke angebracht. Die Temperatur der Pressform beträgt beim Pressen 280°C. Der Reibbelag wird 1 min lang mit einem Druck von 300 N/cm² gepresst. Anschließend wird der Reibbelag bei einer Temperatur von 230°C eine Stunde lang ausgehärtet.

Bei dem Reibbelag des Ausführungsbeispiels beträgt die Grundkompressibilität etwa 100 µm. Bei einer Temperatur von etwa 400°C ist die Kompressibilität nur auf etwa 130 bis 160 µm erhöht, also deutlich geringer als bei den Reibbelägen herkömmlicher Herstellungsverfahren.

Das erfindungsgemäße Verfahren zeichnet sich insbesonders durch die deutliche Reduzierung der Herstellungszeit der Reibbeläge aus Kunstharz, beispielsweise aus Phenolharz, für Bremsen aus. Aufgrund der Verringerung der Zykluszeit von etwa 75% werden auch die Arbeitszeit, die Anzahl der zu verwendenden Werkzeuge und Pressen und ebenso der Raumbedarf in der Produktion erheblich vermindert. Insgesamt ergibt sich daraus eine sehr erhebliche Kostenersparnis. Weiterhin ist der Reibbelag, der nach dem erfindungsgemäßen Verfahren hergestellt wurde, in Bezug auf sein Eigenschaftsprofil einem Reibbelag, der im konventionellen Verfahren hergestellt wurde, in vielerlei Hinsicht als weit überlegen zu bezeichnen.

## Patentansprüche

1. Verfahren zur Herstellung von Reibbelägen aus Kunstharz für Bremsen, wobei das Verfahren ein Mischen der einzelnen Komponenten des Kunstharzes, ein Pressen der Mischung in einer beheizten Form und ein Aushärten in einem Härtungsofen aufweist, **dadurch gekennzeichnet, dass** das Pressen bei einer Temperatur von etwa 200°C bis etwa 400°C durchgeführt wird.

2. Verfahren nach Anspruch 1, **dadurch gekennzeichnet, dass** das Pressen bei einer Temperatur von etwa 220°C bis etwa 350°C durchgeführt wird.

3. Verfahren nach Anspruch 2, **dadurch gekennzeichnet, dass** das Pressen bei einer Temperatur von etwa 240°C bis etwa 320°C durchgeführt wird.

4. Verfahren nach Anspruch 3, **dadurch gekennzeichnet, dass** das Pressen bei einer Temperatur von etwa 260°C bis etwa 300°C durchgeführt wird.

5. Verfahren nach Anspruch 4, **dadurch gekennzeichnet, dass** das Pressen bei einer Temperatur von etwa 280°C durchgeführt wird.

6. Verfahren nach einem der vorstehenden Ansprüche, **dadurch gekennzeichnet, dass** das Pressen in weniger als etwa 6 min erfolgt.

7. Verfahren nach Anspruch 6, **dadurch gekennzeichnet, dass** das Pressen in weniger als etwa 4 min erfolgt.

8. Verfahren nach Anspruch 7, **dadurch gekennzeichnet, dass** das Pressen in weniger als etwa 2 min erfolgt.

9. Verfahren nach Anspruch 8, **dadurch gekennzeichnet, dass** das Pressen in weniger als etwa 1 min erfolgt.

10. Verfahren nach einem der vorstehenden Ansprüche, **dadurch gekennzeichnet, dass** der Pressdruck etwa 100 N/cm² bis etwa 500 N/cm² beträgt.

11. Verfahren nach Anspruch 10, **dadurch gekennzeichnet, dass** der Pressdruck etwa 150 N/cm² bis etwa 400 N/cm² beträgt.

12. Verfahren nach Anspruch 11, **dadurch gekennzeichnet, dass** der Pressdruck etwa 200 N/cm² bis etwa 300 N/cm² beträgt.

13. Verfahren nach einem der vorstehenden Ansprüche, **dadurch gekennzeichnet, dass** das anschließende Aushärten in einem Härtungsofen bis etwa 12 Stunden dauert.

14. Verfahren nach Anspruch 13, **dadurch gekennzeichnet, dass** das anschließende Aushärten in einem Härtungsofen bis etwa 8 Stunden dauert.

15. Verfahren nach Anspruch 14, **dadurch gekennzeichnet, dass** das anschließende Aushärten in einem Härtungsofen bis etwa 4 Stunden dauert.

16. Verfahren nach Anspruch 15, **dadurch gekennzeichnet, dass** das anschließende Aushärten in einem Härtungsofen bis etwa 2 Stunden dauert.

17. Verfahren nach Anspruch 16, **dadurch gekennzeichnet, dass** das anschließende Aushärten in einem Härtungsofen bis etwa 1 Stunde dauert.

18. Verfahren nach Anspruch 17, **dadurch gekennzeichnet, daß** das Aushärten in einem Härtungsofen bei der Reibbelagherstellung weggelassen wird.

19. Reibbelag herstellbar nach einem Verfahren gemäß einem der Ansprüche 1 bis 18.
